# EUROPÄISCHE PATENTANMELDUNG

(11) **EP 3 739 405 A1**
(43) Veröffentlichungstag der Anmeldung: **18.11.2020**
(21) Anmeldenummer: 19174738.5
(22) Anmeldetag: 15.05.2019
(51) Int. Cl.: G05B 19/05

(54) **VERFAHREN UND SYSTEM ZUM AUSFÜHREN EINES SOFTWAREPAKETS**

(71) Anmelder: Siemens Aktiengesellschaft, 80333 München (DE)
(72) Erfinder: Lumpp, Henryk, 76307 Karlsbad (DE); Gross, Stefan, 76706 Dettenheim (DE); Malsch, Christian, 75181 Pforzheim-Eutingen (DE); Strauch, Piotr, 76761 Rülzheim (DE)

(57) **Zusammenfassung**

Die vorliegende Erfindung betrifft ein Verfahren (11) und ein System (2) zum Ausführen eines durch eine speicherprogrammierbare Steuerung (3) ausführbaren Softwarepakets. Wenigstens eine virtuelle speicherprogrammierbare Steuerung (10) wird aus einer Mehrzahl von verfügbaren virtuellen speicherprogrammierbaren Steuerungen (10) ausgewählt und ein Teil des Softwarepakets wird durch die wenigstens eine ausgewählte virtuelle speicherprogrammierbare Steuerung (10) ausgeführt.

## Beschreibung

Die vorliegende Erfindung betrifft ein Verfahren und ein System zum Ausführen eines durch eine speicherprogrammierbare Steuerung ausführbaren Softwarepakets.

Zur, insbesondere automatisierten, Steuerung oder Regelung einer Maschine oder Anlage sind speicherprogrammierbare Steuerungen (Programmable Logic Controller, PLC; im Folgenden auch abgekürzt als SPS) bekannt, welche dazu eingerichtet sind, ein entsprechendes, auch als Anwenderprogramm bezeichnetes Steuerungs- oder Regelungsprogramm ausführen. Das Steuerungs- oder Regelungsprogramm kann dabei in Form eines Softwarepakets aus mehreren Softwaremodulen vorliegen, wobei einzelne Module üblicherweise unterschiedliche Steuerungs- bzw. Regelaufgaben erfüllen. Zum Beispiel kann ein Modul vorgesehen sein, das Sensordaten eines Sensors der Maschine oder Anlage aufnimmt, während ein anderes Modul beispielsweise ein Ventil, insbesondere auf Grundlage der aufgenommenen Sensordaten, steuert. Ein solcher modularer Aufbau des Steuerung- oder Regelungsprogramms hat z.B. den Vorteil, das Programm leicht an Änderungen an der Maschine oder Anlage, beispielsweise den Umbau einer Fertigungslinie, anpassen zu können.

Aus WO 2015/034458 ist in diesem Zusammenhang das Erzeugen virtueller speicherprogrammierbarer Steuerungen bekannt, die zum Testen z.B. eines Softwarepakets oder zu Diagnosezwecken eingesetzt werden können.

Es ist eine Aufgabe der vorliegenden Erfindung, ein verbessertes Verfahren und System zum Ausführen eines Softwarepakets anzugeben.

Diese Aufgabe wird gelöst durch ein Verfahren und ein System zum Ausführen eines durch eine speicherprogrammierbare Steuerung ausführbaren Softwarepakets gemäß den unabhängigen Ansprüchen.

Das Verfahren zum Ausführen eines durch eine speicherprogrammierbare Steuerung ausführbaren Softwarepakets gemäß einem ersten Aspekt der Erfindung weist die folgenden Schritte auf: (i) Auswählen, insbesondere mittels einer (realen bzw. physischen) speicherprogrammierbaren Steuerung, wenigstens einer virtuellen speicherprogrammierbaren Steuerung aus einer Mehrzahl von verfügbaren virtuellen speicherprogrammierbaren Steuerungen; und (ii) Ausführen eines Teils des Softwarepakets durch die wenigstens eine ausgewählte virtuelle speicherprogrammierbare Steuerung, insbesondere auf Veranlassung der (realen bzw. physischen) speicherprogrammierbaren Steuerung.

Eine virtuelle speicherprogrammierbare Steuerung im Sinne der Erfindung ist insbesondere eine, z.B. durch eine durch eine entsprechende Software, emulierte speicherprogrammierbare Steuerung. Unter einer Emulation ist hierbei insbesondere die virtuelle Nachbildung der Funktionalität einer (realen) speicherprogrammierbaren Steuerung zu verstehen, zum Beispiel mittels entsprechender Software. Mit anderen Worten ist eine virtuelle speicherprogrammierbare Steuerung eine Softwarerepräsentation einer realen bzw. physikalischen speicherprogrammierbaren Steuerung.

Ein Teil eines Softwarepakets im Sinne der Erfindung ist insbesondere ein Softwaremodul. Durch mehrere solcher Softwaremodule können beispielsweise verschiedene Funktionen des Softwarepakets umgesetzt werden. Ein einzelnes Softwaremodul kann dabei ein einzelnes Computerprogramm aufweisen, zum Beispiel ein Steuerungs- oder Regelungsprogramm, mit dem beispielsweise eine einzelne Komponente einer verfahrenstechnischen Anlage steuer- bzw. regelbar ist. Ein einzelnes Softwaremodul kann insbesondere eine Anwendung bzw. Applikation sein, d. h. ein Computerprogramm, das für sich alleine lauffähig ist und zum Beispiel eine bestimmte Aufgabe erfüllen kann.

Ein Aspekt der Erfindung basiert auf dem Ansatz, zur Ausführung eines Softwarepakets, welches für eine speicherprogrammierbare Steuerung ausgelegt ist, zusätzliche Rechenkapazität in Form von virtuellen speicherprogrammierbaren Steuerungen bereitzustellen. Teile des Softwarepakets können dann von wenigstens einer ausgewählten virtuellen speicherprogrammierbaren Steuerung ausgeführt werden, was eine Entlastung der speicherprogrammierbaren Steuerung ermöglicht. Dabei ist es bevorzugt, dass eine (reale) speicherprogrammierbare Steuerung die Auswahl trifft und/oder das Ausführen eines Teils des Softwarepakets auf einer ausgewählten speicherprogrammierbaren Steuerung veranlasst bzw. dazu eingerichtet ist.

Virtuelle SPS können beispielsweise von Recheneinheiten betrieben, insbesondere emuliert, werden, die mit der (realen) SPS über ein Netzwerk verbunden sind bzw. mit dieser das Netzwerk bilden. Vorzugsweise sind diese Recheneinheiten dabei Teil der zu steuernden oder zu regelnden Anlage und/oder der entsprechenden, zur Steuerung oder Regelung vorgesehenen Infrastruktur. Zum Beispiel kann eine Mehrzahl an virtuellen SPS von Mikrocontrollern der Anlagenkomponenten, zur Steuerung der Anlage eingesetzten Personalcomputern und/oder dergleichen betrieben werden. Dadurch kann bereits vorhandene Infrastruktur bzw. Rechenkapazität effizient genutzt werden.

Um einen Teil des Softwarepakets von einer virtuellen SPS ausführen lassen zu können, wird vorzugsweise ein Kommunikationsprotokoll bereitgestellt, mit dem eine (reale) SPS mit virtuellen SPS, insbesondere über ein Netzwerk wie einen Feldbus zum Beispiel einer verfahrenstechnischen Anlage, kommunizieren kann. Anhand des Protokolls kann beispielsweise ein Teil des Softwarepakets, insbesondere eine Applikation, an die virtuelle SPS zur Ausführung übermittelt werden. Vorzugsweise können anhand des Protokolls auch Informationen zu der Mehrzahl an virtuellen SPS, insbesondere an die (reale) SPS, übermittelt werden, auf deren Grundlage die Auswahl der virtuellen SPS, welche einen Teil des Softwarepakets ausführen soll, getroffen werden kann.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einer bevorzugten Ausführungsform wird die wenigstens eine virtuelle speicherprogrammierbare Steuerung klassifiziert und auf Grundlage der Klassifikation ausgewählt. Beispielsweise kann die virtuelle SPS bezüglich einer ihr zugeordneten Eigenschaft, z.B. ihrer Rechenleistung, ihrer Zuverlässigkeit, einer Laufzeit von an die virtuelle SPS gesendeten und/oder von ihr empfangenen Daten und/oder dergleichen, in eine entsprechende Klasse eingeordnet bzw. ausgewählt werden. Insbesondere ist es möglich, die Mehrzahl der verfügbaren virtuellen SPS bezüglich einer ihnen jeweils zugeordneten Eigenschaft miteinander zu vergleichen und die wenigstens eine virtuelle SPS auf Grundlage des Vergleichs zu klassifizieren und/oder auszuwählen. Dadurch kann sichergestellt werden, dass eine virtuelle SPS ausgewählt und mit der Ausführung des Teils des Softwarepakets betraut wird, welche die Anforderungen zur Ausführung des entsprechenden Teils des Softwarepakets erfüllt.

In einer weiteren bevorzugten Ausführungsform wird die wenigstens eine virtuelle speicherprogrammierbare Steuerung in Bezug auf ihre Rechenleistung und/oder Auslastung klassifiziert, wobei unter der Rechenleistung und/oder Auslastung einer virtuellen SPS insbesondere eine ihr zugeordnete Rechenleistung und/oder Auslastung zu verstehen ist. Dabei basiert die einer virtuellen SPS zugeordnete Rechenleistung und/oder Auslastung vorzugsweise auf der Rechenleistung und/oder Auslastung der Recheneinheit, durch welche die virtuelle SPS betrieben wird. Dies erlaubt eine fundierte Einschätzung, ob eine virtuelle SPS zur Durchführung einer bestimmten Aufgabe geeignet ist, z.B. ausreichende Rechenleistung aufweist und/oder noch nicht ausgelastet ist. Das Softwarepaket kann so insgesamt besonders effizient ausgeführt werden.

Beispielsweise kann jede virtuelle SPS in eine der folgenden Klassen eingeordnet werden: hohe Performance, mittlere Performance oder niedrige Performance. In Abhängigkeit der zur Ausführung des Teils des Softwarepakets benötigten Performanceklasse kann dann wenigstens eine virtuelle SPS zuverlässig ausgewählt werden.

In einer weiteren bevorzugten Ausführungsform wird die wenigstens eine virtuelle speicherprogrammierbare Steuerung in Bezug auf eine Architektur einer Anlage, in welche die speicherprogrammierbare Steuerung integriert ist, klassifiziert. Eine Architektur eine Anlage ist in diesem Zusammenhang insbesondere die räumliche Anordnung und/oder der verfahrenstechnische Zusammenhang von Komponenten der Anlage relativ zueinander. Es ist somit zum Beispiel denkbar, die virtuelle SPS in Bezug auf den räumlichen Abstand der Recheneinheit, welche die virtuelle SPS betreibt, zu einer zu steuernden bzw. zu regelnden Komponente und/oder zur (realen) SPS zu bewerten und in eine entsprechende Klasse einzuordnen bzw. auszuwählen. Dadurch kann die Laufzeit zum Beispiel von Daten, die von der virtuellen SPS empfangen und/oder von ihr gesendet werden, berücksichtigt werden. Dies ist insbesondere bei zeitkritischen Steuerungs- oder Regelungsaufgaben vorteilhaft.

In einer weiteren bevorzugten Ausführungsform wird die wenigstens eine virtuelle speicherprogrammierbare Steuerung in Bezug auf ihre Zuverlässigkeit klassifiziert. Unter der Zuverlässigkeit einer virtuellen SPS ist dabei insbesondere eine ihr zugeordnete Zuverlässigkeit zu verstehen. Dabei basiert die einer virtuellen PLZ zugeordnete Zuverlässigkeit vorzugsweise auf einer Benutzereinschätzung der Recheneinheit, durch welche die virtuelle PLZ betrieben wird. Alternativ oder zusätzlich basiert die Zuverlässigkeit auf einer statistischen Fehlerhäufigkeit der Recheneinheit. Die Klassifizierung nach Zuverlässigkeit erlaubt es dabei, die Relevanz von Teilen des Softwarepakets für die Gesamtsteuerung oder -regelung zu berücksichtigen. Dies ist insbesondere vorteilhaft, wenn Teile des Softwarepakets der Redundanz dienen oder gar keine unmittelbare Steuerungs- oder Regelungsaufgabe erfüllen.

Beispielsweise kann jede virtuelle SPS in eine der folgenden Klassen eingeordnet werden: hohe Zuverlässigkeit oder durchschnittliche Zuverlässigkeit. Dabei kann z.B. virtuellen SPS, die von Recheneinheiten eines Herstellers betrieben werden, der für die Herstellung qualitativ hochwertiger Produkte bekannt ist, eine hohe Zuverlässigkeit zugeordnet werden.

In einer weiteren bevorzugten Ausführungsform wird die wenigstens eine virtuelle speicherprogrammierbare Steuerung von einem Auswahlmodul der (realen) speicherprogrammierbaren Steuerung ausgewählt. Das Auswahlmodul kann dabei als Softwaremodul ausgebildet sein und wird auch als "Orchestrator" oder "Communication Broker" bezeichnet. Das Auswahlmodul ist vorzugsweise dazu eingerichtet, über das Kommunikationsprotokoll mit der Mehrzahl an virtuellen SPS zu kommunizieren. Dadurch kann das Auswahlmodul beispielsweise Informationen bezüglich den virtuellen SPS zugeordnete Eigenschaften wie Rechenleistung, Zuverlässigkeit, Laufzeit und/oder dergleichen abfragen und/oder entsprechende, von den virtuellen SPS aktiv bereitgestellte Informationen empfangen. Das Auswahlmodul ist in bevorzugter Weise dazu eingerichtet, zu entscheiden, welche Teile des Softwarepakets von der (realen) SPS ausgeführt werden und welche Teile des Softwarepakets von welcher der virtuellen SPS ausgeführt werden und kann somit eine zentrale Steuerungseinheit bilden.

In einer weiteren bevorzugten Ausführungsform stellen die verfügbaren virtuellen speicherprogrammierbaren Steuerungen jeweils wenigstens ein Auswahlkriterium bereit. Vorzugsweise wird die wenigstens eine virtuelle speicherprogrammierbare Steuerung auf Grundlage des wenigstens einen bereitgestellten Auswahlkriteriums ausgewählt. Dabei können zum Beispiel einer virtuellen PLZ zugeordnete Eigenschaften wie etwa Rechenleistung, Zuverlässigkeit, Laufzeit und/oder dergleichen Auswahlkriterien bilden bzw. als solche aufgefasst werden. Anhand der bereitgestellten Auswahlkriterien ist es somit insbesondere möglich, die virtuellen SPS zu klassifizieren. Dabei kann auf Grundlage der Klassifizierung die Auswahl getroffen werden.

Ein Bereitstellen eines Auswahlkriteriums im Sinne der Erfindung ist insbesondere das Ausgeben des Auswahlkriteriums bzw. einer entsprechenden Information, zum Beispiel in Form eines Signals bzw. entsprechender Daten. So kann etwa jede virtuelle SPS, insbesondere durch das Kommunikationsprotokoll, Auswahlkriterien in Form von ihr zugeordneten Eigenschaften an die (reale) SPS übermitteln, welche auf Grundlage der übermittelten Auswahlkriterien eine Auswahl treffen kann.

In einer weiteren bevorzugten Ausführungsform wird wenigstens ein Auswahlkriterium in Bezug auf Änderungen überwacht. Auf Grundlage der Überwachung wird vorzugsweise wenigstens eine weitere virtuelle speicherprogrammierbare Steuerung ausgewählt. In bevorzugter Weise wird dabei der Teil des Softwarepakets, der durch die (ursprünglich) ausgewählte virtuelle SPS ausgeführt wird oder werden soll, zumindest teilweise durch die weitere ausgewählte virtuelle SPS ausgeführt. Insbesondere kann der entsprechende Teil des Softwarepakets zumindest gemeinsam von der (ursprünglich) ausgewählten und der weiteren ausgewählten virtuellen SPS ausgeführt werden. Dies kann auch als Funktionsclustern bezeichnet werden und erlaubt es zum Beispiel, Performanceengpässe zuverlässig zu überbrücken.

Vorzugsweise wird beim Überwachen des Auswahlkriteriums eine Änderung ermittelt, insbesondere prädiziert oder detektiert. Bei Vorliegen einer Änderung oder bei Erwartung einer solchen kann dann die weitere virtuelle SPS ausgewählt und mit der Ausführung des entsprechenden Teils des Softwarepakets betraut werden. Die wenigstens eine ausgewählte virtuelle SPS kann zum Beispiel bei der Feststellung, dass sich ihre Auslastung erhöht hat oder in nahe Zukunft erhöhen wird, ein entsprechendes Signal bereitstellen, insbesondere an die (reale) SPS ausgeben. Dort kann ein entsprechendes Auswahlmodul auf Grundlage dieses Signals dann die wenigstens eine weitere virtuelle SPS auswählen.

In einer weiteren bevorzugten Ausführungsform ist oder wird Teilen des Softwarepakets jeweils wenigstens ein Anforderungskriterium zugeordnet, welches in bevorzugter Weise eine Mindestanforderung zur Ausführung des entsprechenden Teils des Softwarepakets charakterisiert. Vorzugsweise wird die wenigstens eine virtuelle speicherprogrammierbare Steuerung auf Grundlage des wenigstens einen Anforderungskriteriums ausgewählt. Insbesondere wird gerade eine virtuelle SPS ausgewählt, welche die durch das Anforderungskriterium charakterisierte Mindestanforderung erfüllt.

Dabei kann das Anforderungskriterium beispielsweise einer zur zuverlässigen und/oder fehlerfreien Ausführung des Teils des Softwarepakets benötigten Rechenleistung, Zuverlässigkeit, Laufzeit und/oder dergleichen entsprechen oder diese zumindest angeben. Die Anforderungskriterien können dabei als Service-Level-Agreement (SLA) oder als Teil eines solchen aufgefasst werden, mit dem zum Beispiel ein Hersteller zumindest des betreffenden Teils des Softwarepakets Mindestanforderungen zur Ausführung desselben angibt bzw. der Hersteller der (realen) SPS die Erfüllung solcher Mindestanforderungen zusichert. Die den Teilen des Softwarepakets zugeordneten Anforderungskriterien ermöglichen eine besonders zuverlässige und/oder planbare Ausführung des gesamten Softwarepakets.

In einer weiteren bevorzugten Ausführungsform sind die Auswahlkriterien und die Anforderungskriterien komplementär zueinander. Beispielsweise kann ein Auswahlkriterium eine bereitstellbare Rechenleistung einer virtuellen SPS charakterisieren, während ein komplementäres Anforderungskriterium eine benötigte Rechenleistung eines Teils des Programmpakets charakterisiert. Anhand von zueinander komplementären Auswahl- und Anforderungskriterien kann eine Auswahl aus einer Mehrzahl von verfügbaren virtuellen SPS besonders leicht und schnell durchgeführt werden.

In einer weiteren bevorzugten Ausführungsform wird wenigstens ein Teil des Softwarepakets identifiziert, der durch eine der virtuellen speicherprogrammierbaren Steuerungen ausgeführt werden soll. Beispielsweise können Teile des Softwarepakets wie einzelne Applikationen, die bzw. deren Ausführung nicht sicherheitsrelevant und/oder nicht zeitkritisch ist, von einer virtuellen SPS ausgeführt werden. Solche Teile des Softwarepakets werden auch als "nicht-missionskritisch" bzw. "nonmission critical" bezeichnet. Teile des Softwarepakets, die bzw. deren Ausführung dagegen sicherheitsrelevant und/oder zeitkritisch ist, zum Beispiel weil sie eine Komponente einer Anlage in Echtzeit steuern, werden vorzugsweise von der (realen) SPS ausgeführt und auch als "missionskritisch" bzw. "mission critical" bezeichnet. Die Identifikation missionskritischer bzw. nicht-missionskritischer Teile des Softwarepakets erlaubt eine besonders flexible und/oder effiziente Ausführung des Softwarepakets.

In einer weiteren bevorzugten Ausführungsform ist oder wird Teilen des Softwarepakets jeweils wenigstens ein Auslagerungskriterium zugeordnet, wobei das Auslagerungskriterium in bevorzugter Weise die Relevanz des entsprechenden Teils des Softwarepakets zum Beispiel für die Gesamtsteuerung oder - regelung einer Anlage charakterisiert. Vorzugsweise werden die Teile des Softwarepakets zur Ausführung durch eine der virtuellen speicherprogrammierbaren Steuerungen auf Grundlage des wenigstens einen Auslagerungskriterien identifiziert. Beispielsweise können Teile des Softwarepakets wie etwa Applikationen, die sicherheitsrelevante und/oder zeitkritische Prozesse bzw. die korrespondierenden Komponenten der Anlage steuern oder zumindest zur Steuerung beitragen, als missionskritisch identifiziert werden. Andere Teile des Softwarepakets wie etwa Applikationen, die einem Benutzer zum Beispiel zusätzliche Hintergrundinformationen liefern und keine Steuerungs- oder Regelungsaufgabe erfüllen, können dagegen als nicht-missionskritisch identifiziert und daher zur Ausführung durch virtuelle SPS ausgewählt werden.

Dabei ist es denkbar, dass ein Auslagerungskriterium einem Anforderungskriterium entspricht oder daraus abgeleitet wird. Beispielsweise kann auf Grundlage einer von dem entsprechenden Teil des Softwarepakets benötigte Laufzeit, mit der Eingangsdaten wie etwa aufgenommene Sensordaten bereitgestellt werden und/oder Ausgangsdaten, insbesondere Steuerungssignale, die nach Bearbeitung der Eingangsdaten an einer Komponente der Anlage bereitgestellt werden sollen, ermittelt werden, ob der entsprechende Teil des Softwarepakets eine Echtzeitsteuerung oder -regelung darstellt und entsprechend als missionskritisch von der (realen) SPS ausgeführt werden soll.

In einer weiteren bevorzugten Ausführungsform ist das Softwarepaket eine verfahrenstechnische Steuerung für eine verfahrenstechnische Anlage. Das Softwarepaket kann beispielsweise Applikationen zum Aufnehmen von Sensordaten von Sensoren, Applikationen zur Regelung von Ventilen und/oder Aktuatoren und/oder dergleichen enthalten. Anhand der Auswahl wenigstens einer virtuellen SPS und dem Ausführen eines Teils des Softwarepakets, insbesondere wenigstens einer Applikation, durch die ausgewählte virtuelle SPS können die in der Anlage auftretenden Prozesse effizient gesteuert werden.

Ein System zum Ausführen eines durch eine speicherprogrammierbare Steuerung ausführbaren Softwarepakets gemäß einem zweiten Aspekt der Erfindung weist eine Mehrzahl von virtuellen speicherprogrammierbaren Steuerungen auf, die jeweils dazu eingerichtet sind, zumindest einen Teil des Softwarepakets auszuführen. Zudem weist das System eine (reale bzw. physische) speicherprogrammierbare Steuerung auf, welche dazu eingerichtet ist, aus der Mehrzahl von verfügbaren virtuellen speicherprogrammierbaren Steuerungen wenigstens eine virtuelle speicherprogrammierbare Steuerung zum Ausführen des Teils des Softwarepakets auszuwählen.

Die in Bezug auf den ersten Aspekt der Erfindung und dessen vorteilhafte Ausgestaltung beschriebenen Merkmale und Vorteile gelten, zumindest wo technisch sinnvoll, auch für den zweiten Aspekt der Erfindung.

Weitere Merkmale, Vorteile und Anwendungsmöglichkeiten der Erfindung ergeben sich aus der nachfolgenden Beschreibung im Zusammenhang mit den Figuren. Es zeigen wenigstens teilweise schematisch:
- FIG 1: ein Beispiel einer verfahrenstechnischen Anlage mit einem System zum Ausführen eines Softwarepakets; und
- FIG 2: ein Beispiel eines Verfahren zum Ausführen eines Softwarepakets.

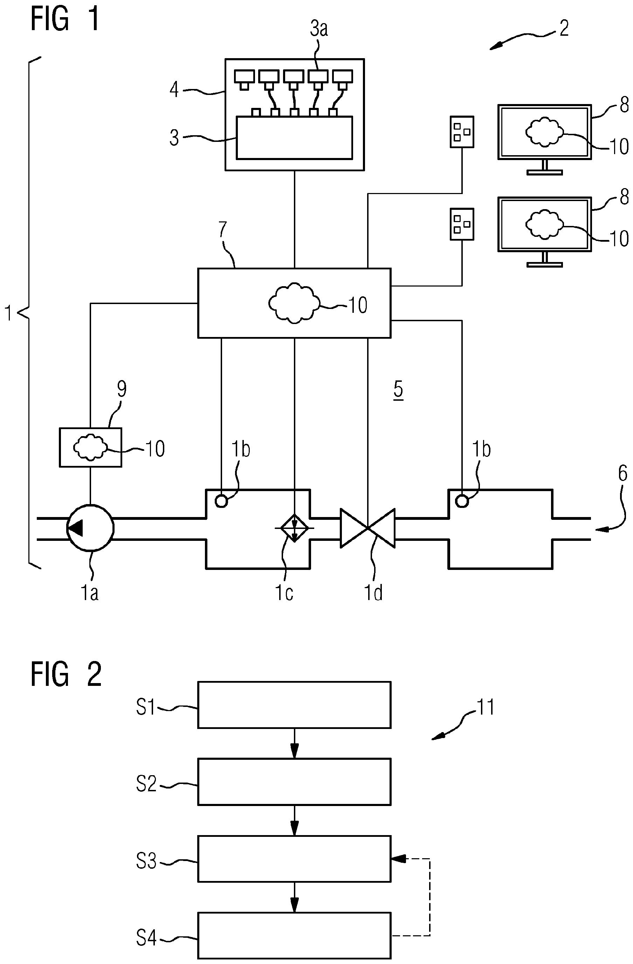

**FIG 1** zeigt ein Beispiel einer verfahrenstechnischen Anlage 1 mit einem System 2 zum Ausführen eines durch eine speicherprogrammierbare Steuerung 3 (Programmable Logic Controller, PLC) ausführbaren Softwarepakets. Die SPS 3 ist in einem Schaltschrank 4 der Anlage 1 vorgesehen, der auch Erweiterungsmodule 3a der SPS 3 enthält, zum Beispiel Baugruppen zum Anbinden an ein Feldbus-System 5.

Über das Feld Bus-System 5 stehen verschiedene Komponenten 1a-d sowohl untereinander als auch mit der SPS 3 in einer Kommunikationsverbindung. Die Anlage 1, z.B. innerhalb einer Fertigungslinie 6 ablaufende Prozesse, kann dadurch durch ein von der SPS 3 ausgeführtes Steuerungsprogramm gesteuert werden, das in Form des Softwarepakets vorliegt. Mittels Sensoren 1b können beispielsweise Messwerte wie Temperatur, Druck und/oder dergleichen in Form von Sensordaten aufgenommen werden, die der Steuerung von Aktoren, zum Beispiel eines Ventils 1d, eines Temperaturreglers 1c, einer Pumpe 1a und/oder dergleichen, zugrunde gelegt werden können. Die SPS 3 kann die durch die Sensordaten charakterisierten Messwerte dabei zum Beispiel in Regelschleifen umsetzen, etwa in Form einer oder mehrerer PID-Regelungen.

Im gezeigten Beispiel sind die Komponenten 1a-d und die SPS 3 durch ein Kopplungselement 7 miteinander verbunden. Das auch als "Switch" bezeichnete Kopplungselement 7 erzeugt somit ein Feldbus-Netzwerk. In dieses Netzwerk können auch Steuerungs- und/oder Beobachtungsstationen 8 eingebunden sein, die zur (manuellen) Steuerung bzw. Überwachung der Anlage 1, insbesondere der ablaufenden Prozesse, eingerichtet sind.

Zumindest ein Teil der Komponenten 1a-d und die Steuerungs- und/oder Beobachtungsstationen 8 sowie das Kopplungselement 7 weisen im gezeigten Beispiel jeweils eine Recheneinheit auf, die zur Ausführung von Computerprogrammen geeignet ist. Solche Recheneinheiten können zum Beispiel in Form von Personalcomputern an den Steuerungs- und/oder Beobachtungsstationen 8 oder in Form von Mikrocontrollern 9 der Komponenten 1a-d vorliegen. Diese Recheneinheiten sind in bevorzugter Weise dazu eingerichtet, jeweils wenigstens eine virtuelle speicherprogrammierbare Steuerung 10 zu betreiben, d. h. eine speicherprogrammierbare Steuerung 3 zu emulieren.

Neben den Komponenten 1a-d und den Steuerungs- und/oder Beobachtungsstationen 8 sowie dem Kopplungselement 7 können vorzugsweise auch weitere Teilnehmer des Netzwerks, d. h. über den Feldbus 5 verbundene Endgeräte und/oder anderweitig in das Netzwerk eingebundene Endgeräte, solche Recheneinheiten aufweisen (nicht gezeigt). Insbesondere ist es denkbar, alle in einem Internet der Dinge (Internet of Things, IoT) miteinander vernetzten Endgeräte, die eine Recheneinheit aufweisen, zum Betreiben wenigstens einer virtuellen SPS 10 zu verwenden.

Die (reale bzw. physische) SPS 3 weist in bevorzugter Weise ein Auswahlmodul auf, zum Beispiel in Form eines auch als "Orchestrator" oder "Communication Broker" bezeichneten Softwaremoduls. Das Auswahlmodul ist vorzugsweise dazu eingerichtet, eine der virtuellen SPS 10 auszuwählen, um einen Teil des Softwarepakets, zum Beispiel eine Applikation des Softwarepakets zum Aufnehmen von Messwerten durch einen Sensor 1b, durch die ausgewählte virtuelle SPS 10 ausführen zu lassen. Das Auswahlmodul kann dabei ein integraler Bestandteil der (realen) SPS 3, etwa in ein Betriebssystem integriert, sein.

Zum Auswählen der wenigstens einen virtuellen SPS 10 und/oder um das Ausführen des Teils des Softwarepakets durch die ausgewählte virtuelle SPS 10 zu veranlassen ist in bevorzugter Weise ein Kommunikationsprotokoll vorgesehen, mit dem die (reale) SPS 3 mit den virtuellen SPS 10 kommunizieren kann. Dieses Kommunikationsprotokoll kann in spezifischer Weise für die Kommunikation zwischen der (realen) SPS 3 und den virtuellen SPS 10 eingerichtet und insbesondere zusätzlich zu einem konventionellen Feldbus-Protokoll, mit dem die (reale) SPS 3 mit den Komponenten 1a-d kommuniziert, vorgesehen sein.

Die Auswahl wenigstens einer virtuellen SPS 10 zum Ausführen des entsprechenden Teils des Softwarepakets hängt dabei in bevorzugter Weise von Auswahlkriterien ab, die den virtuellen SPS 10 bzw. deren Recheneinheiten zugeordnet sind oder werden. Alternativ oder zusätzlich hängt die Auswahl von Anforderungskriterien ab, die den Teilen des Softwarepakets zugeordnet sind oder werden. Die Auswahlkriterien können dabei jeweils eine Eigenschaft der entsprechenden virtuellen SPS 10 bzw. der entsprechenden Recheneinheit charakterisieren, beispielsweise die Rechenleistung und/oder Auslastung bzw. (noch verfügbare) Rechenkapazität, die Zuverlässigkeit, die Laufzeit z.B. von Signalen zur bzw. von der virtuellen SPS 10 und/oder dergleichen. Die Auswahlkriterien können damit ein Angebot (an verfügbarer Rechenleistung etc.) wiederspiegeln.

Die Anforderungskriterien können komplementär dazu ausgebildet sein und entsprechend eine Nachfrage widerspiegeln. Beispielsweise charakterisieren die Anforderungskriterien eine zur Ausführung des entsprechenden Teils des Softwarepakets benötigte minimale Rechenleistung, Zuverlässigkeit, Laufzeit und/oder dergleichen. Es ist etwa denkbar, dass eine Applikation zur PID-Regelung eine hohe Rechenleistung benötigt und daher nur solche virtuellen SPS 10 ausgewählt werden, die in einer hohen Performanceklasse eingeordnet wurden. Entsprechend kann für eine Applikation zur Eingangs- und Ausgangssteuerung, die zum Beispiel bei Erreichen eines vorgegebenen Grenzwertes ein Alarmsignal erzeugt bzw. ausgibt und eine mittlere Rechenleistung benötigt, eine virtuelle SPS 10 aus einer mittleren Performanceklasse ausgewählt werden. Für eine Applikation zur Datenaufnahme von einem Sensor 1b, die lediglich eine geringe Rechenleistung benötigt, reicht es dagegen aus, eine virtuelle SPS 10 aus einer niedrigen Performanceklasse auszuwählen.

Bei der Auswahl der virtuellen SPS 10 kann auch die Architektur der Anlage 1, insbesondere die räumliche Anordnung der Komponenten 1a-d relativ zueinander und/oder zur (realen) SPS 3, berücksichtigt werden. Die Architektur der Anlage 1 kann die Auswahl einer spezifischen virtuellen SPS 10 z.B. insofern beeinflussen, als das die räumliche Nähe der virtuellen SPS 10 bzw. der entsprechenden Recheneinheit zu einer durch einen Teil des Softwarepakets gesteuerten Komponente 1a-d vorteilhaft zum Beispiel im Hinblick auf z.B. Signallaufzeiten sein kann.

Im gezeigten Beispiel kann es etwa vorteilhaft sein, wenn die durch den Mikrocontroller 9 betriebene virtuelle SPS 10 einen mit der Pumpe 1a korrespondierenden Teil des Softwarepakets ausführt, zum Beispiel den Betriebszustand der Pumpe 1a ermittelt. Dabei kann ein mit der Pumpe 1a korrespondierender Teil des Softwarepakets von dieser virtuellen SPS 10 jedoch nur so lange ausgeführt werden, als dieser Teil nicht relevant im Hinblick auf die Betriebssicherheit ist und/oder nicht von zeitkritischen Eingaben der (realen) SPS 3 anhängt, also z.B. keine Regelung der Pumpe 1a in Echtzeit umsetzt.

**FIG 2** zeigt ein Beispiel eines Verfahrens 11 zum Ausführen eines durch eine speicherprogrammierbare Steuerung (Programmable Logic Controller, PLC) ausführbaren Softwarepakets. Vorzugsweise wird dieses Ausführen in einem ersten Schritt S1 vorbereitet, etwa indem das Softwarepaket in eine speicherprogrammierbare Steuerung geladen wird, virtuelle speicherprogrammierbare Steuerungen in Betrieb genommen, d.h. emuliert, werden und/oder ein Kommunikationsprotokoll zur Kommunikation zwischen der (realen) speicherprogrammierbaren Steuerung und den virtuellen speicherprogrammierbaren Steuerungen bereitgestellt wird. Zu diesem Zweck kann beispielsweise entsprechende Software zu Emulation der virtuellen SPS und/oder zur Implementierung des Kommunikationsprotokolls über ein Netzwerk, zum Beispiel einen Feldbus, an Teilnehmer des Netzwerks mit einer Recheneinheit verteilt bzw. auf diesen installiert werden.

In einem weiteren Schritt S2 stellen die virtuellen SPS jeweils wenigstens ein Auswahlkriterium, zum Beispiel eine Rechenleistung, aktuelle oder prädizierte Auslastung, Zuverlässigkeit und/oder dergleichen, bereit. Dazu können die virtuellen SPS jeweils entsprechende Daten oder Signale an die (reale) SPS übermitteln. Denkbar ist hierbei, dass dies automatisch, insbesondere regelmäßig in vorgegebenen Zeitintervallen, oder nach Aufforderung durch die (reale) SPS geschieht.

Auf Grundlage der bereitgestellten Auswahlkriterien wird in einem weiteren Schritt S3 wenigstens eine der virtuellen SPS ausgewählt, insbesondere durch die (reale) SPS, zum Beispiel durch ein Auswahlmodul. Dabei können auch Anforderungskriterien berücksichtigt werden, die Teilen des Softwarepakets zugeordnet sind und Mindestanforderungen charakterisieren, die zum Ausführen des jeweiligen Teils notwendig oder zumindest hinreichend sind. Beispielsweise kann anhand eines Vergleichs von Auswahl- und Anforderungskriterien entschieden werden, welche nicht-sicherheitsrelevanten und/oder nichtzeitkritischen Teile des Softwarepakets von welcher der verfügbaren virtuellen SPS ausgeführt werden.

In einem weiteren Schritt S4 wird ein Teil des Softwarepakets von wenigstens einer virtuellen SPS ausgeführt. Dabei kann die Ausführung von der (realen) SPS veranlasst werden. Dies entlastet die (reale) SPS und erlaubt eine effiziente Nutzung der insgesamt verfügbaren Rechenkapazität.

Beim Ausführen des Teils des Softwarepakets durch die wenigstens eine ausgewählte virtuelle SPS kann wenigstens eines der Auswahlkriterien, das von dieser virtuellen SPS bereitgestellt wurde, in Bezug auf Änderung überwacht werden. Diese Überwachung wird vorzugsweise von der virtuellen SPS selbst ausgeführt. Ändert sich ein Auswahlkriterium, steigt zum Beispiel die Auslastung der entsprechenden Recheneinheit und sinkt damit die Rechenkapazität der virtuellen SPS, kann die virtuelle SPS ein entsprechendes Signal an die (reale) SPS ausgeben, welche daraufhin eine weitere virtuelle SPS auswählt und ein, insbesondere zusätzliches, Ausführen des Teils des Softwarepakets auf der weiteren virtuellen SPS veranlasst. Dieser Mechanismus ist in Figur 2 durch den gestrichelten Pfeil angedeutet und kann z.B. sicherstellen, dass Performanceengpässe zuverlässig überbrückt werden.

### Bezugszeichenliste

- 1: Anlage
- 1a: Pumpe
- 1b: Sensor
- 1c: Temperaturregler
- 1d: Ventil
- 2: System
- 3: speicherprogrammierbare Steuerung
- 3a: Erweiterungsmodule
- 4: Schaltschrank
- 5: Feldbus
- 6: Fertigungslinie
- 7: Kopplungselement
- 8: Steuerungs- und/oder Beobachtungsstation
- 9: Mikrocontroller
- 10: virtuelle speicherprogrammierbare Steuerung
- 11: Verfahren

- S1-S4: Verfahrensschritte

## Patentansprüche

1. Verfahren (11) zum Ausführen eines durch eine speicherprogrammierbare Steuerung (3) ausführbaren Softwarepakets, aufweisend die folgenden Schritte:
- Auswählen (S3) wenigstens einer virtuellen speicherprogrammierbaren Steuerung (10) aus einer Mehrzahl von verfügbaren virtuellen speicherprogrammierbaren Steuerungen (10); und
- Ausführen (S4) eines Teils des Softwarepakets durch die wenigstens eine ausgewählte virtuelle speicherprogrammierbare Steuerung (10).

2. Verfahren (11) nach Anspruch 1, **dadurch gekennzeichnet, dass** die wenigstens eine virtuelle speicherprogrammierbare Steuerung (10) klassifiziert und auf Grundlage der Klassifikation ausgewählt wird.

3. Verfahren (11) nach einem der Ansprüche 1 oder 2, **dadurch gekennzeichnet, dass** die wenigstens eine virtuelle speicherprogrammierbare Steuerung (10) in Bezug auf ihre Rechenleistung und/oder Auslastung klassifiziert wird.

4. Verfahren (11) nach einem der vorangehenden Ansprüche, **dadurch gekennzeichnet, dass** die wenigstens eine virtuelle speicherprogrammierbare Steuerung (10) in Bezug auf eine Architektur einer Anlage (1), in welche die speicherprogrammierbare Steuerung (3) integriert ist, klassifiziert wird.

5. Verfahren (11) nach einem der vorangehenden Ansprüche, **dadurch gekennzeichnet, dass** die wenigstens eine virtuelle speicherprogrammierbare Steuerung (10) in Bezug auf ihre Zuverlässigkeit klassifiziert wird.

6. Verfahren (11) nach einem der vorangehenden Ansprüche, **dadurch gekennzeichnet, dass** die wenigstens eine virtuelle speicherprogrammierbare Steuerung (10) von einem Auswahlmodul der speicherprogrammierbaren Steuerung (3) ausgewählt wird.

7. Verfahren (1) nach einem der vorangehenden Ansprüche, **dadurch gekennzeichnet, dass** die verfügbaren virtuellen speicherprogrammierbaren Steuerungen (10) jeweils wenigstens ein Auswahlkriterium bereitstellen und die wenigstens eine virtuelle speicherprogrammierbare Steuerung (10) auf Grundlage des wenigstens einen bereitgestellten Auswahlkriteriums ausgewählt wird.

8. Verfahren (11) nach einem der vorangehenden Ansprüche, **dadurch gekennzeichnet, dass** wenigstens ein Auswahlkriterium in Bezug auf Änderungen überwacht und auf Grundlage der Überwachung wenigstens eine weitere virtuelle speicherprogrammierbare Steuerung (10) ausgewählt wird.

9. Verfahren (11) nach einem der vorangehenden Ansprüche, **dadurch gekennzeichnet, dass** Teilen des Softwarepakets jeweils wenigstens ein Anforderungskriterium zugeordnet ist und die wenigstens eine virtuelle speicherprogrammierbare Steuerung (10) auf Grundlage des wenigstens einen Anforderungskriteriums ausgewählt wird.

10. Verfahren (11) nach Anspruch 7 und 8, **dadurch gekennzeichnet, dass** die Auswahlkriterien und die Anforderungskriterien komplementär zueinander sind.

11. Verfahren (11) nach einem der vorangehenden Ansprüche, **dadurch gekennzeichnet, dass** wenigstens ein Teil des Softwarepakets identifiziert wird, der durch eine der virtuellen speicherprogrammierbaren Steuerungen (10) ausgeführt werden soll.

12. Verfahren (11) nach Anspruch 10, **dadurch gekennzeichnet, dass** Teilen des Softwarepakets jeweils wenigstens ein Auslagerungskriterium zugeordnet ist und die Teile zur Ausführung durch eine der virtuellen speicherprogrammierbaren Steuerungen (10) auf Grundlage des wenigstens einen Auslagerungskriteriums identifiziert werden.

13. Verfahren (11) nach einem der vorangehenden Ansprüche, **dadurch gekennzeichnet, dass** das Softwarepaket eine verfahrenstechnische Steuerung für eine verfahrenstechnische Anlage (1) ist.

14. System (2) zum Ausführen eines durch eine speicherprogrammierbare Steuerung (3) ausführbaren Softwarepakets, aufweisend:
- eine Mehrzahl von virtuellen speicherprogrammierbaren Steuerungen (10), die jeweils dazu eingerichtet sind, zumindest einen Teil des Softwarepakets auszuführen; und
- eine speicherprogrammierbare Steuerung (3), welche dazu eingerichtet ist, aus der Mehrzahl von verfügbaren virtuellen speicherprogrammierbaren Steuerungen (10) wenigstens eine zum Ausführen des Teils des Softwarepakets auszuwählen.
